# EUROPEAN PATENT APPLICATION

(11) **EP 4 723 295 A1**
(43) Date of publication of application: **08.04.2026**
(21) Application number: 25202690.1
(22) Date of filing: 17.09.2025
(51) Int. Cl.: H01M 10/42, H01M 10/48, H01M 50/284

(54) **BATTERY DEVICE**

(30) Priority: 01.10.2024 JP 2024172722
(71) Applicant: TOYOTA JIDOSHA KABUSHIKI KAISHA, Toyota-shi, Aichi-ken 471-8571 (JP)
(72) Inventor: Fujiwara, Mai, Toyota-shi 471-8571 (JP); Sasaki, Manabu, Toyota-shi 471-8571 (JP)
(74) Representative: TBK

(57) **Abstract**

A battery device (1) includes a battery cell (10) having a sulfide-based electrolyte, a circuit board (20) having a detection part (21) that reacts to hydrogen sulfide, and an insulation member (30) interposed between a part of the circuit board (20) and the battery cell (10). A part or all of the detection part (21) is exposed to a space (40) surrounded by the battery cell (10), the circuit board (20), and the insulation member (30).

## Description

### TECHNICAL FIELD

The present disclosure relates to a battery device including a battery cell having a sulfide-based electrolyte, particularly relating to a technique for detecting hydrogen sulfide generated from a battery cell.

### BACKGROUND ART

All-solid-state batteries are attracting attention as next-generation battery cells for battery devices such as batteries. Compared to conventional batteries that use liquid electrolytes, solid-state batteries have advantages such as higher safety and longer life. In particular, all-solid-state batteries using sulfide-based electrolytes have a large capacity and high output and are expected to be used in batteries for vehicles such as electric vehicles (BEVs: battery electric vehicles) and hybrid electric vehicles (HEVs: hybrid electric vehicles).

On the other hand, when a battery cell having a sulfide-based electrolyte is used as a battery cell of an all-solid-state battery, there is a risk of hydrogen sulfide gas being generated because of malfunction. Hydrogen sulfide gas is toxic and corrodes metal parts nearby. For this reason, it is necessary to detect the generation of hydrogen sulfide for safe use of a battery device including a battery cell having a sulfide-based electrolyte.

For a battery pack whose battery case stores battery cells having a sulfide-based electrolyte, Patent Literature 1 discloses a configuration in which a hydrogen sulfide sensor placed inside a battery case detects the generation of hydrogen sulfide. Patent Literature 2 refers the technical level of this technical field.

### List of Related Art

Patent Literature 1: Japanese Laid-Open Patent Application No. 2020-202104
Patent Literature 2: Japanese Laid-Open Patent Application No. 2022-108491

### SUMMARY

When hydrogen sulfide is generated from a battery cell, a quick and reliable detection of the generation of hydrogen sulfide is required. For a configuration in which a hydrogen sulfide sensor is placed inside a battery case, its detection accuracy of hydrogen sulfide could possibly be low, because the generation of hydrogen sulfide cannot be detected until the concentration of hydrogen sulfide inside the battery case reaches a certain level. Thus, there is a demand for improved accuracy in detecting the generation of hydrogen sulfide in battery devices.

The present disclosure has been made in consideration of the above problem. One object of the present disclosure is to provide a battery device with high accuracy in detecting hydrogen sulfide.

One aspect of the present disclosure relates to a battery device. The battery device includes a battery cell having a sulfide-based electrolyte, a circuit board having a detection part that reacts to hydrogen sulfide, and an insulation member interposed between a part of the circuit board and the battery cell. A part or all of the detection part is exposed to the space surrounded by the battery cell, the circuit board, and the insulation member.

The battery device according to the present disclosure can detect generation of hydrogen sulfide from the battery cell by a detection part that reacts to hydrogen sulfide. In particular, according to the present disclosure, the insulation member is interposed between the battery cell and a part of the circuit board having the detection part. The detection part is exposed to the space surrounded by the battery cell, the circuit board, and the insulation member. That is, the detection part is provided so as to face the battery cell side. This makes it possible to arrange the detection part in the vicinity of the battery cell while preventing the board and the battery cell from coming into contact with each other and causing a short circuit. Therefore, when hydrogen sulfide is generated from the battery cell, the detection part can quickly and reliably react with the hydrogen sulfide even when the concentration of hydrogen sulfide is low. As a result, the battery device with high accuracy in detecting hydrogen sulfide can be provided.

### BRIEF DESCRIPTION OF DRAWINGS

FIG. 1 is a schematic diagram showing a configuration of a battery device according to a first embodiment;
FIG. 2 is a schematic diagram showing a configuration of a battery device according to the first embodiment.
FIG. 3 is a schematic diagram for explaining a method for determining generation of hydrogen sulfide by a monitoring circuit provided in the battery device.
FIG. 4 is a flowchart showing a flow of a process executed by a monitoring circuit.
FIG. 5 is a schematic diagram showing an example of a first modified example of the first embodiment.
FIG. 6 is a schematic diagram showing an example of a second modified example of the first embodiment.
FIG. 7 is a schematic diagram showing an example of a third modified example of the first embodiment.
FIG. 8 is a schematic diagram showing an example of a fourth modified example of the first embodiment.
FIG. 9 is a schematic diagram showing an example of a fourth modified example of the first embodiment.
FIG. 10 is a schematic diagram showing an example of a fifth modified example of the first embodiment.
FIG. 11 is a schematic diagram showing an example of a fifth modified example of the first embodiment.
FIG. 12 is a schematic diagram showing a configuration of the battery device according to a second embodiment.
FIG. 13 is a schematic diagram showing a configuration of the battery device according to a second embodiment.
FIG. 14 is a schematic diagram showing an example of a modified example of the second embodiment.
FIG. 15 is a schematic diagram showing a configuration of the battery device according to a third embodiment.
FIG. 16 is a schematic diagram showing a configuration of the battery device according to a third embodiment.
FIG. 17 is a schematic diagram showing a configuration of the battery device according to a fourth embodiment.
FIG. 18 is a schematic diagram showing a configuration of the battery device according to a fourth embodiment.

### DETAILED DESCRIPTION

Hereinafter, embodiments of the present disclosure will be described with reference to the accompanying drawings. In addition, the same or corresponding components in each drawing are given the same reference numerals, and the description thereof will be simplified or omitted.

### 1. FIRST EMBODIMENT

### 1.1 Configuration

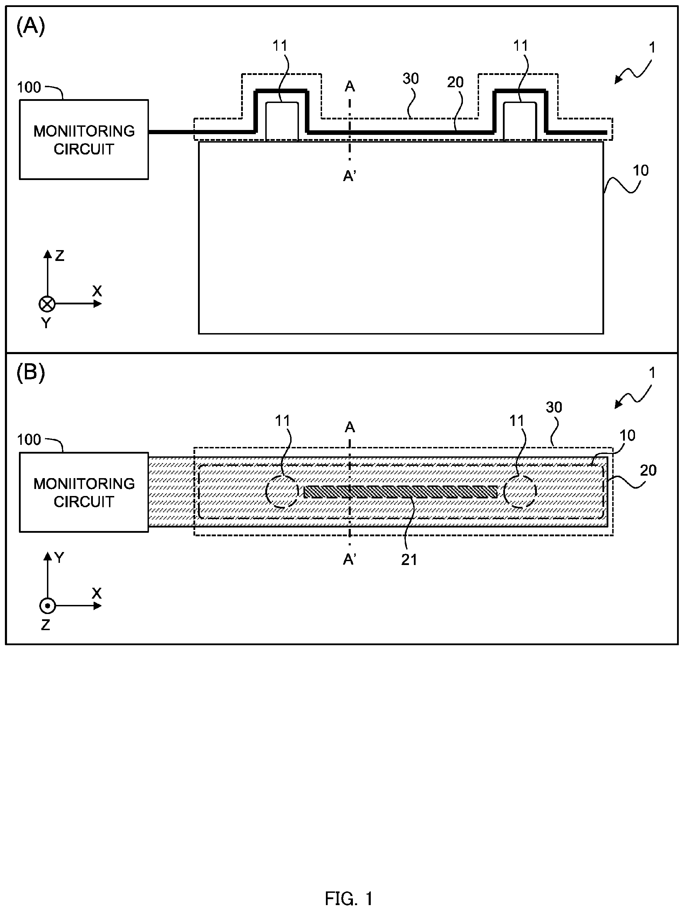

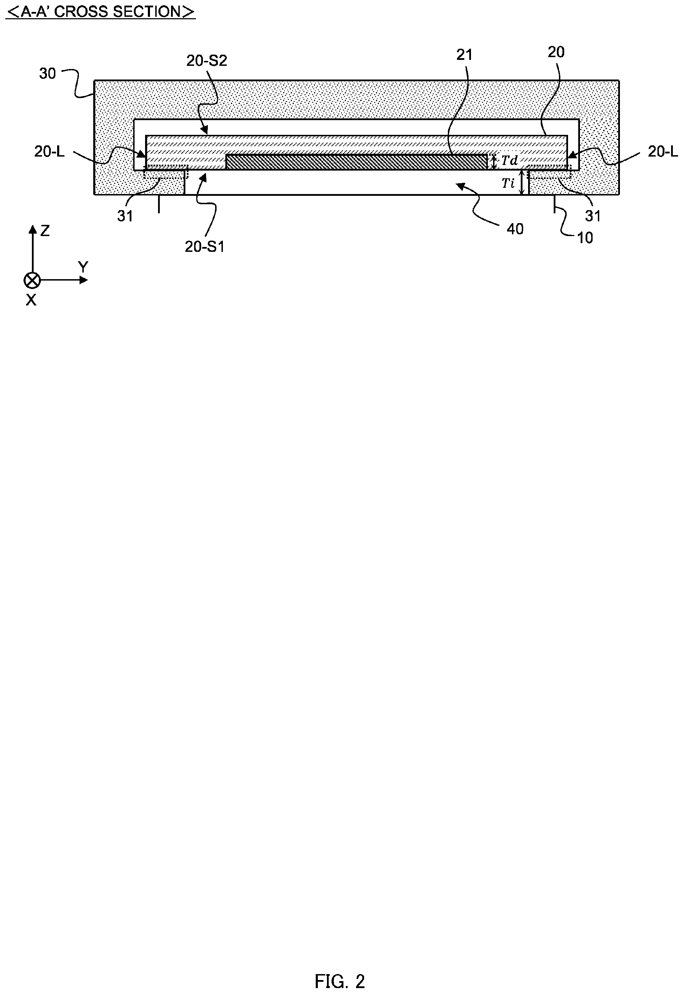

FIG. 1 and FIG. 2 are schematic diagrams showing a configuration of a battery device 1 according to a first embodiment. The battery device 1 includes a battery cell 10, a circuit board 20, an insulation member 30, and a monitoring circuit 100. Part A and B of FIG. 1 show the battery device 1 as viewed from different directions. In this embodiment, an X direction, a Y direction, and a Z direction are defined to indicate three-dimensional directions. The X direction, the Y direction, and the Z direction are perpendicular to each other. In the first embodiment, the X direction is the width direction with respect to the front of the battery cell 10. The Y direction is the depth direction with respect to the front of the battery cell 10. The Z direction is the vertical direction. Part A of FIG. 1 shows the battery device 1 as viewed from the Y direction, and Part B shows the battery device 1 as viewed from the Z direction. Par B of FIG. 1 can also be referred to be a top view of the battery device 1. FIG. 2 shows a cross-sectional view taken along line A- A' shown in FIG. 1 as viewed from the X direction.

The battery cell 10 has a sulfide-based electrolyte. Typically, the battery cell 10 is an all-solid-state battery that uses a solid-state sulfide-based electrolyte. The type of the battery cell 10 is not particularly limited. For example, the battery cell 10 may be of a laminate type or a rectangular type.

The circuit board 20 is a printed circuit board (PCB) having a pattern formed of metal. The circuit board 20 may in particular be a flexible printed circuit (FPC). In the first embodiment, the circuit board 20 is disposed on the upper surface of the battery cell 10 and extends in the X direction.

As shown in FIG. 2, the insulation member 30 is interposed between a part of the circuit board 20 and the battery cell 10. The insulation member 30 contacts the circuit board 20 and the battery cell 10 and electrically insulates the circuit board 20 and the battery cell 10. The insulation member 30 is made of, for example, a resin material. In the first embodiment, the insulation member 30 is a member that covers the upper part of the battery cell 10 including electrode terminals 11. For example, the insulation member 30 serves as a case for a bus bar module of the battery cell 10. In FIG. 1, in order to show the arrangement of the circuit board 20, only the outline of the insulation member 30 is shown by a dashed line, and the other parts of the insulation member 30 are shown transparently.

The circuit board 20 has a detection part 21 that reacts to hydrogen sulfide. For example, the metal forming the pattern of the circuit board 20 is a metal that reacts with hydrogen sulfide and corrodes (e.g., copper, silver). The detection part 21 is formed by a part of the pattern of the circuit board 20 exposed on the surface of the circuit board 20. This can be achieved by configuring the circuit board 20 so that surface protection (e.g., solder resist, cover lay) or surface treatment (e.g., plating) is not performed on the part of the pattern. The detection part 21 formed in this way detects the generation of hydrogen sulfide by the corrosion of the metal. However, the detection part 21 may be composed of electronic components such as a fuse that breaks in response to hydrogen sulfide, a sensor that detects hydrogen sulfide, etc.

In the battery device 1, the detection part 21 is exposed to a space 40 surrounded by the battery cell 10, the circuit board 20, and the insulation member 30. That is, as shown in FIG. 2, the detection part 21 is provided on a surface 20-S1 of the circuit board 20 facing the space 40 (hereinafter referred to as a "first surface 20-S1"). The first surface 20-S1 can also be referred to be the surface of the circuit board 20 facing the battery cell 10 side. In Part B of FIG. 1, the detection part 21 is drawn to show the arrangement of the detection part 21 on the circuit board 20. In the example shown in Part B of FIG. 1, the detection part 21 is disposed between the two electrode terminals 11 of the battery cell 10. However, it should be noted that the detection part 21 is typically not provided on a surface 20-S2 (hereinafter referred to as a "second surface 20-S2") opposite the first surface 20-S1.

In the first embodiment, the insulation member 30 is integrally formed so as to cover a part of the first surface 20-S1, the side surface 20-L, and the second surface 20-S2 of the circuit board 20, as shown in FIG. 2. In other words, the insulation member 30 is integrally formed so as to surround the circuit board 20. In particular, the space 40 is an opening part of the insulation member 30. That is, the circuit board 20 is disposed so that the detection part 21 overlaps the opening part of the insulation member 30. Furthermore, in the first embodiment, a thickness Td of the detection part 21 is smaller than a thickness Ti of the part of the insulation member 30 surrounding the space 40. When the detection part 21 is formed by a part of the pattern of the circuit board 20, the thickness Td of the detection part 21 corresponds the thickness of the pattern of the circuit board 20.

Furthermore, the circuit board 20 is bonded to the insulation member 30 at a boundary part 31 of the space 40. In the first embodiment, the boundary part 31 of the space 40 can also be regarded as the boundary of the opening part of the insulation member 30. The adhesive for bonding the circuit board 20 and the insulation member 30 may be appropriately selected.

The monitoring circuit 100 is connected to the circuit board 20 and monitors the detection status of the detection part 21. The monitoring circuit 100 then determines whether hydrogen sulfide is generated from the battery cell 10 based on the detection status of the detection part 21. The method of determining the generation of hydrogen sulfide by the monitoring circuit 100 will be described later.

In this way, the battery device 1 can detect the generation of hydrogen sulfide by the detection part 21. Multiple instances of the above-described battery device 1 may be combined to form a battery stack. In a battery stack configured in this manner, the monitoring circuit 100 may determine whether hydrogen sulfide is being generated for each of the plurality of battery cells 10. All-solid-state batteries using sulfide-based electrolytes have large capacity and high output, making them suitable for use as batteries in vehicle such as BEVs, HEVs, etc. The battery stack thus configured may in particular be a battery to be mounted on a vehicle.

### 1.2 Determining Generation of Hydrogen Sulfide Using Monitoring Circuit

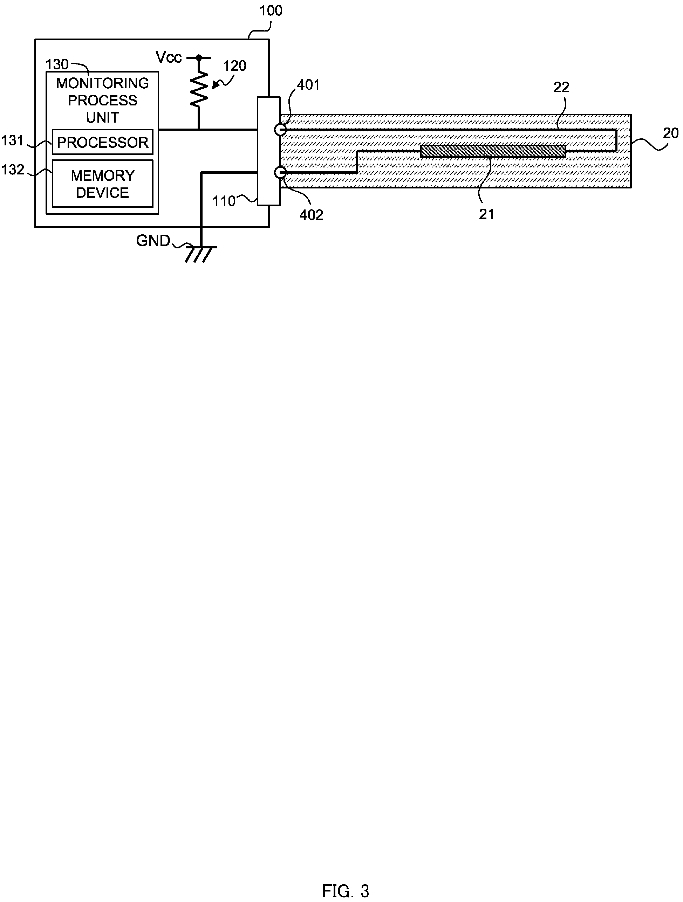

A method for determining the generation of hydrogen sulfide by the monitoring circuit 100 will be described below. In particular, a case where the detection part 21 is formed by a pattern on the circuit board 20 will be described. FIG. 3 is a schematic diagram for explaining a method for determining the generation of hydrogen sulfide by the monitoring circuit 100.

The monitoring circuit 100 and the circuit board 20 are connected via a connector 110. Then, the pattern 22 of the circuit board 20 forms a wiring that electrically connects a first node 401 and a second node 402. The wiring forms one current path. In the monitoring circuit 100, the first node 401 is connected to a power supply of a voltage Vcc (for example, 5 V) via a resistor 120, and the second node 402 is connected to a ground GND of a reference potential (for example, 0 V).

The monitoring circuit 100 includes a monitoring process unit 130. The monitoring process unit 130 is a computer that executes a process for monitoring the voltage. In particular, the monitoring process unit 130 may be a microcontroller. The monitor process unit 130 is arranged so that the electric potential between the resistor 120 and the first node 401 is input thereto. For example, when the monitoring process unit 130 is a microcontroller, an input port of the microcontroller is connected between the resistor 120 and the first node 401. The resistor 120 serves as a pull-up resistor for the monitor process unit 130. For example, the resistance value of the resistor 120 is about 10 kΩ. Since the second node 402 is connected to the ground GND, the monitoring process unit 130 can detect the voltage between the first node 401 and the second node 402. It should be noted that the voltage between the first node 401 and the second node 402 can also be indirectly detected by measuring the voltage across the resistor 120. Thus, the monitoring process unit 130 may be arranged to measure the voltage across the resistor 120.

The monitoring process unit 130 includes one or more processors 131 (hereinafter simply referred to as processor 131) and one or more memory devices 132 (hereinafter simply referred to as memory device 132). The processor 131 executes a variety of processes. The processor 131 may be, for example, a general-purpose processor, a specific application processor, a central processing unit (CPU), a graphics processing unit (GPU), an application specific integrated circuit (ASIC), a field-programmable gate array (FPGA), an integrated circuit, a conventional circuit, or a combination of one or more of these. The processor 131 may also be referred to as processing circuitry. The memory device 132 stores various information necessary for the processes executed by the processor 131. The memory device 132 comprises a recording medium such as a random-access memory (RAM), a read only memory (ROM), a solid-state drive (SSD), a hard disk drive (HDD), etc. The memory device 132 stores a computer program executable by processor 131. The computer program is made up of a number of instruction codes that describe the processes to be executed by the processor 131. The computer program is recorded on a computer-readable recording medium. The functions of the monitoring process unit 130 are realized by cooperation between processor 131 that executes the computer program and the memory device 132 .

Under normal conditions, that is, when no hydrogen sulfide is being generated from the battery cell 10, the path between the first node 401 and the second node 402 is simply a current path having no resistance. Therefore, the ground GND potential is input to the monitoring process unit 130. That is, the monitoring process unit 130 acquires the reference potential as a detected value.

In an anomaly condition, that is, when hydrogen sulfide is generated from the battery cell 10, the metal of the detection part 21 reacts with the generated hydrogen sulfide and corrodes. When metal corrodes and becomes sulfide, the resistance value of the detection part 21 increases. Additionally, metals tend to migrate radially due to corrosion. Corroded metal can also move when subjected to vibration. For example, the vibration of a vehicle can cause corroded metal to move. As the corrosion progresses in this manner, the metal of the detection part 21 is gradually decomposed and the cross-sectional area decreases. As a result, the resistance value of the detection part 21 further increases. Then, the metal of the detection part 21 will eventually break.

During the process in which the resistance value of the detection part 21 increases, the monitoring process unit 130 acquires the divided voltage due to the resistance value of the detection part 21 as the detected value. In other words, as the resistance value of the detection part 21 increases, the detected value of the monitoring process unit 130 increases from the reference potential. When the detection part 21 finally breaks down, the power supply voltage Vcc is input to the monitoring process unit 130. That is, the monitoring process unit 130 obtains the power supply voltage Vcc as the detected value.

When the detection part 21 is formed by the pattern 22 on the circuit board 20 in this manner, the detection status of the detection part 21 appears as a voltage between the first node 401 and the second node 402. That is, when hydrogen sulfide is generated from the battery cell 10, the detected value of the monitoring process unit 130 changes from the reference potential to Vcc. Therefore, the monitoring process unit 130 can determine whether hydrogen sulfide is being generated from the battery cell 10 based on a change in the detected value (the voltage between the first node 401 and the second node 402). For example, the monitoring process unit 130 determines that hydrogen sulfide is being generated from the battery cell 10 when the amount of change in the detected value from the initial value becomes greater than a threshold value. Alternatively, the monitoring process unit 130 may use the detected value directly, without calculating the amount of variation in the detected value, and determine that hydrogen sulfide is being generated from the battery cell 10 when the detected value becomes larger than a threshold value.

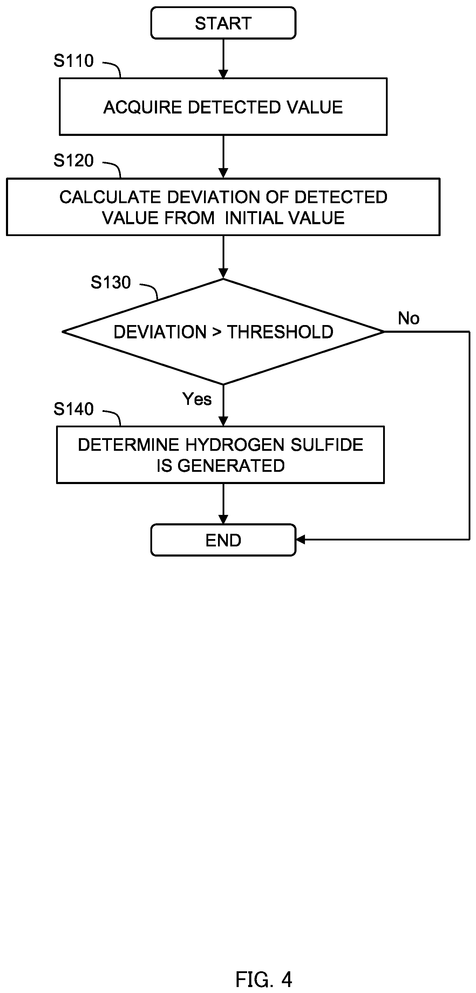

FIG. 4 is a flowchart showing the process flow of the process executed by the monitoring circuit 100 (more specifically, the monitoring process unit 130). The process flow shown in FIG. 4 is repeatedly executed at predetermined cycles.

First, in step S110, the monitoring circuit 100 acquires a detected value. Next, in step S120, the monitoring circuit 100 calculates the amount of deviation of the detected value from the initial value. In the above-described monitoring circuit 100, the initial value of the detected value is a reference potential, and the amount of deviation from the initial value is the difference between the detected value and the reference potential. In particular, when the reference potential is 0 V, the amount of deviation from the initial value coincides with the detected value. Next, in step S130, the monitoring circuit 100 determines whether the calculated amount of deviation is greater than a threshold value.

If the amount of change is equal to or less than the threshold value (step S130; No), the monitoring circuit 100 determines that hydrogen sulfide is not being generated and ends this process. If the amount of variation is greater than the threshold value (step S130; Yes), the monitoring circuit 100 determines that hydrogen sulfide is being generated from the battery cell (step S140). The monitoring circuit 100 may further execute process of warning a user (e.g., driver of vehicle) that hydrogen sulfide is being generated by visual or audible means.

Note that the process flow shown in FIG. 4 is just an example. The monitoring circuit 100 can also determine that hydrogen sulfide is being generated from the battery cell 10 due to other process flows. For example, as described above, the monitoring circuit 100 may be configured to determine that hydrogen sulfide is being generated from the battery cell 10 by using the detected value directly, without calculating the amount of deviation in the detected value. In this case, in the process flow shown in FIG. 4, the process of step S120 is skipped. Also, in step S130, it is determined whether the detected value is greater than a threshold value. Then, if the detected value is greater than the threshold value, the monitoring circuit 100 determine that hydrogen sulfide is being generated from the battery cell 10. In addition, the monitoring circuit 100 can also determine that hydrogen sulfide is being generated from the battery cell 10 by using the detected value of a part of the pattern 22 that is different from the detection part 21 and comparing that detected value with the detected value of the detection part 21.

In this way, the monitoring circuit 100 can determine whether hydrogen sulfide is being generated from the battery cell 10 based on the detection status of the detection part 21. Therefore, in the battery device 1, the monitoring circuit 100 and the circuit board 20 constitute a hydrogen sulfide detection device that detects hydrogen sulfide generated from the battery cell 10.

The above-described monitoring circuit 100 is configured so that the resistor 120 serves as a pull-up resistor for the monitoring process unit 130. However, the monitoring circuit 100 may have other configurations. For example, the monitoring circuit 100 may be configured such that the resistor 120 is a pull-down resistor for the monitoring process unit 130. That is, the first node 401 may be directly connected to the power supply, and the second node 402 may be connected to the ground GND via the resistor 120. And, the monitoring process unit 130 may be arranged to detect the voltage between the first node 401 and the second node 402 . For example, the input port of the monitoring process unit 130 is connected between the resistor 120 and the second node 402. When the monitoring circuit 100 is configured in this manner, in normal condition, the monitoring process unit 130 acquires the power supply voltage Vcc as a detected value. When hydrogen sulfide is generated from the battery cell 10, the detected value of the monitoring process unit 130 changes from Vcc to the reference potential. Therefore, the monitoring circuit 100 configured in this manner can also determine whether hydrogen sulfide is being generated from the battery cell 10 based on the detection status of the detection part 21. At this time, the process flow of the process executed by the monitoring circuit 100 may be the same as that shown in FIG. 4. In this case, the initial value of the detected value is the power supply voltage Vcc, and the amount of deviation from the initial value is the difference between the detected value and Vcc. In addition, the monitoring circuit 100 can also be configured to monitor the detection status of the detection part 21 by applying a bridge circuit, etc. When a bridge circuit is applied, contact resistance, etc. can be reduced.

When the detection part 21 is configured with electronic components, the monitoring circuit 100 can monitor the detection status by measuring the state of the electronic components or acquiring a signal from the electronic components. For example, if the detection unit 21 is a fuse, the monitoring circuit 100 is configured to measure the voltage across the fuse. This allows the monitoring circuit 100 to monitor the detection status as to whether the fuse is blown. Furthermore, for example, if the detection part 21 is a sensor, the monitoring circuit 100 is configured to obtain a signal indicating the detection status from the sensor. Even when the detection part 21 is configured from electronic components in these manners, the monitoring circuit 100 still can determine whether hydrogen sulfide is generated from the battery cell 10 based on the detection status of the detection part 21.

### 1.3 Effects

As described above, the battery device 1 according to the first embodiment can detect the generation of hydrogen sulfide from the battery cell 10 by the detection part 21 that reacts to hydrogen sulfide. **In** particular, according to the first embodiment, the insulation member 30 is interposed between the battery cell 10 and a part of the circuit board 20 having the detection part 21. The detection part 21 is exposed to a space 40 surrounded by the battery cell 10, the circuit board 20, and the insulation member 30. That is, the detection part 21 is provided on a first surface 20-S1 of the circuit board 20 facing the battery cell 10 side. This allows the detection part 21 to be disposed in the vicinity of the battery cell 10 while preventing the circuit board 20 and the battery cell 10 from coming into contact with each other and causing a short circuit. Therefore, when hydrogen sulfide is generated from the battery cell 10, the detection part 21 can quickly and reliably react with the hydrogen sulfide even when the concentration of hydrogen sulfide is low. As described above, according to the first embodiment, it is possible to provide the battery device 1 with high accuracy in detecting hydrogen sulfide.

Furthermore, according to the first embodiment, the detection part 21 may be formed by a part of the pattern 22 of the circuit board 20 exposed on the surface of the circuit board 20. The pattern 22 of the circuit board 20 can be made extremely thin. For example, the pattern 22 can be formed to a thickness of about 50 µm. By forming the detection part 21 using such a pattern 22, the thickness of the circuit board 20 can be reduced, and the battery device 1 can be made small. As a result, the cost of the battery device 1 can be reduced. Furthermore, the detection part 21 formed by the pattern 22 immediately reacts to hydrogen sulfide and corrodes. As a result, the detection accuracy of the battery device 1 can be improved.

Furthermore, according to the first embodiment, the insulation member 30 is integrally formed so as to cover a part of the first surface 20-S1, the side surface 20-L, and the second surface 20-S2 of the circuit board 20. In particular, the space 40 is an opening part of the insulation member 30. This prevents hydrogen sulfide generated from the battery cell 10 from leaking to the outside, and allows the detection part 21 to more easily react with hydrogen sulfide. As a result, the detection accuracy of the battery device 1 can be improved. In addition, the protection performance of the circuit board 20 can be improved.

Furthermore, according to the first embodiment, the thickness Td of the detection part 21 is smaller than the thickness Ti of the part of the insulation member 30 surrounding the space 40. This makes it possible to prevent contact between the circuit board 20 and the battery cell 10 even in cases where the detection part 21 reacts with hydrogen sulfide and increases in volume. As a result, the insulation properties of the battery device 1 can be improved.

Furthermore, according to the first embodiment, the circuit board 20 is bonded to the insulation member 30 at the boundary part 31 of the space 40. This makes it possible for hydrogen sulfide generated from the battery cell 10 to remain in the space 40 more easily. As a result, the detection accuracy of the battery device 1 can be further improved.

### 1.4 Modifications

The battery device 1 according to the first embodiment can be modified in various ways. Hereinafter, some modified examples of the battery device 1 according to the first embodiment will be described.

### 1.4.1 First Modification

In the first modified example, the insulation member 30 is further interposed between a part of the detection part 21 and the battery cell 10. In other words, the detection part 21 includes a part exposed to the space 40 (hereinafter referred to as a "first detection part") and the other part (hereinafter referred to as a "second detection part"). The insulation member 30 is interposed between the second detection part and the battery cell 10.

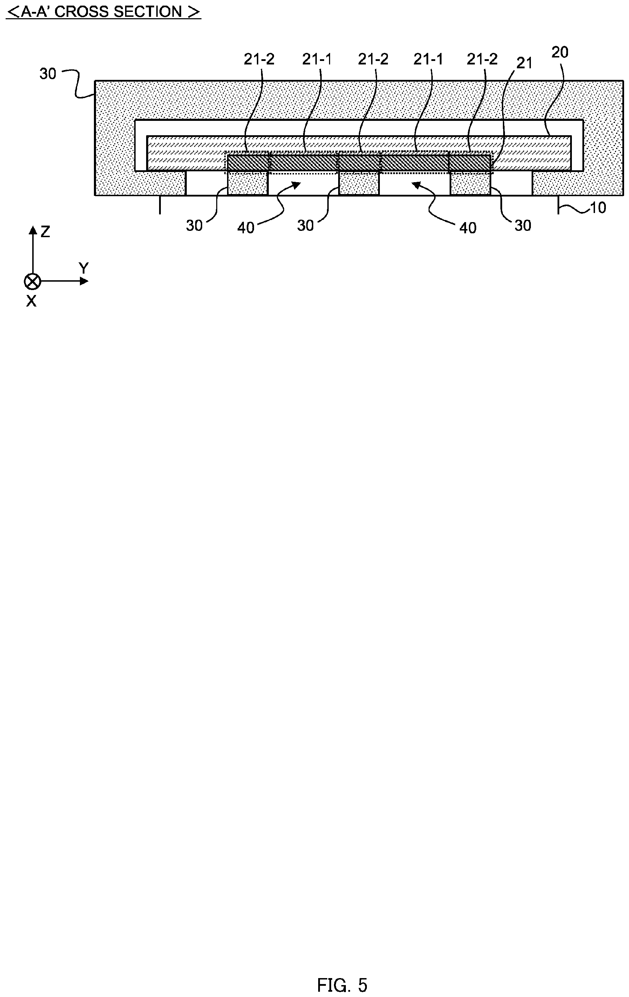

FIG. 5 is a schematic diagram showing an example of the first modified example. FIG. 5 shows a cross-sectional view similar to FIG. 2. In the example shown in FIG. 5, the detection part 21 includes the first detection part 21-1 and the second detection part 21-2. The insulation member 30 is interposed between the second detection part 21-2 and the battery cell 10. When the insulation member 30 is integrally formed, it can be considered that the insulation member 30 has a plurality of opening parts that expose the first detection part 21-1 to the space 40. The insulation member 30 interposed between the second detection part 21-2 and the battery cell 10 may be separate members.

According to the first modified example, the insulation member 30 is interposed between a part of the detection part 21 and the battery cell 10. This can improve the insulation properties of the battery device 1 . Furthermore, in the case where the detection part 21 is formed by the pattern 22 of the circuit board 20, the strength of the detection part 21 can be improved.

### 1.4.2 Second Modification

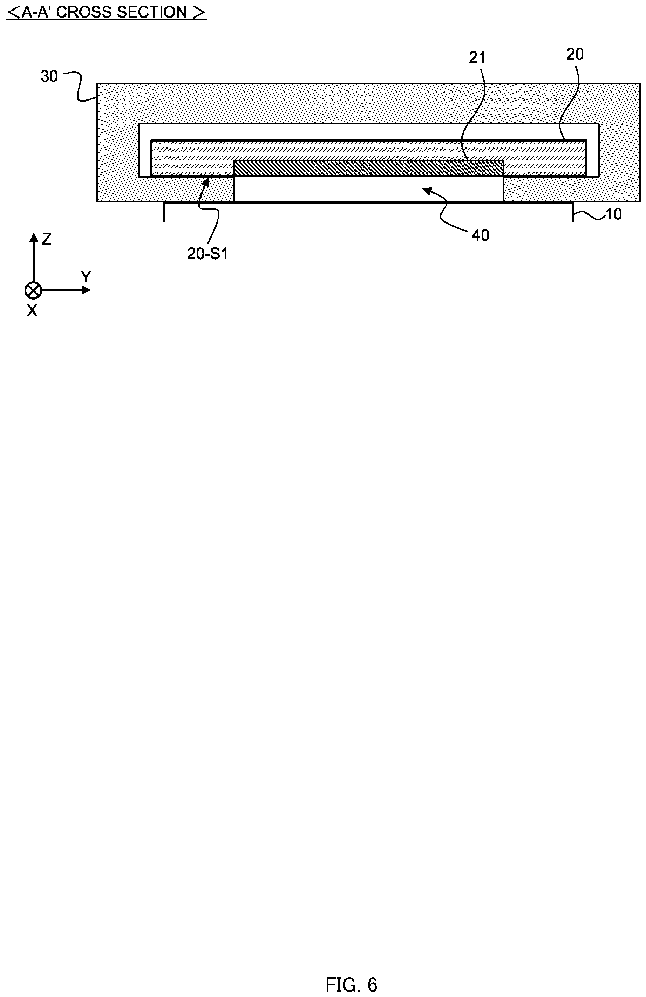

In the second modified example, the insulation member 30 is interposed at least between the battery cell 10 and the part of the first surface 20-S1 of the circuit board 20 other than the detection part 21. FIG. 6 is a schematic diagram showing an example of the second modified example. FIG. 6 shows a cross-sectional view similar to FIG. 2. In the example shown in FIG. 6, in contrast to the case shown in FIG. 2, the insulation member 30 is interposed between the battery cell 10 and the part of the first surface 20-S1 of the circuit board 20 other than the detection part 21. That is, the part of the first surface 20-S1 of the circuit board 20 other than the detection part 21 is not exposed to the space 40.

According to the second modified example, the insulation member 30 is interposed at least between the battery cell 10 and the part of the first surface 20-S1 of the circuit board 20 other than the detection part 21. This makes it possible to improve the insulation of the battery device 1 while ensuring the detection accuracy of the battery device 1.

### 1.4.3 Third Modification

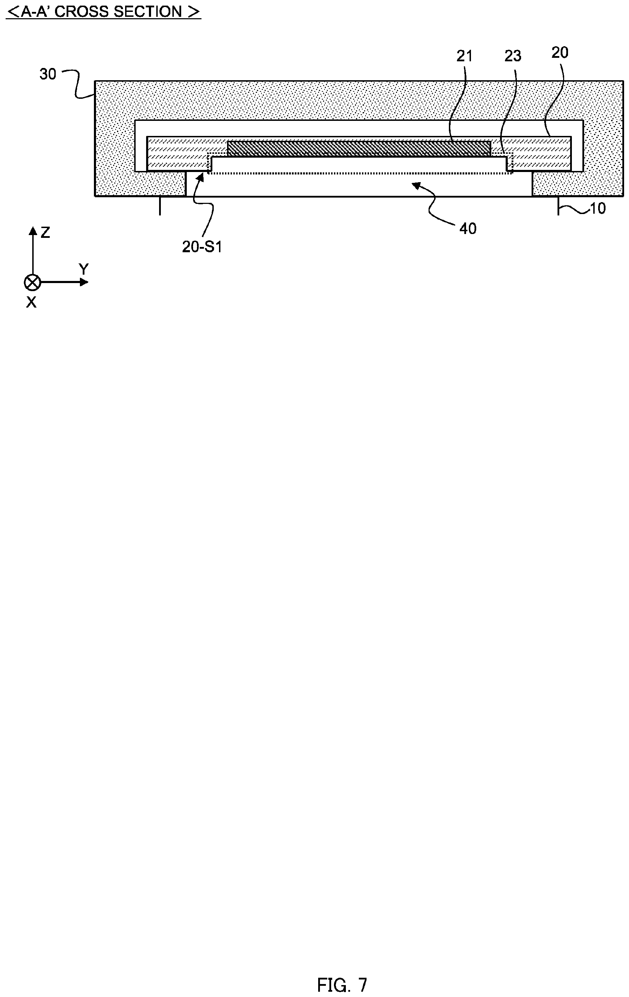

In a third modified example, the circuit board 20 has a recess in the first surface 20-S1. Furthermore, the detection part 21 is provided in the recess. FIG. 7 is a schematic diagram showing an example of the third modified example. FIG. 7 shows a cross-sectional view similar to FIG. 2. In the example shown in FIG. 7, in contrast to the example shown in FIG. 2, the circuit board 20 has a recess 23. The detection part 21 is provided in the recess 23 .

According to the third modification, the circuit board 20 has the recess 23, which can further prevent the circuit board 20 and the battery cell 10 from coming into contact with each other. This can improve the insulation of the battery device 1. It is also expected that hydrogen sulfide generated from the battery cell 10 tends to be trapped in the recess 23 . Therefore, by providing the detection part 21 in the recess 23, the detection accuracy of the battery device 1 can be further improved.

### 1.4.4 Fourth Modification

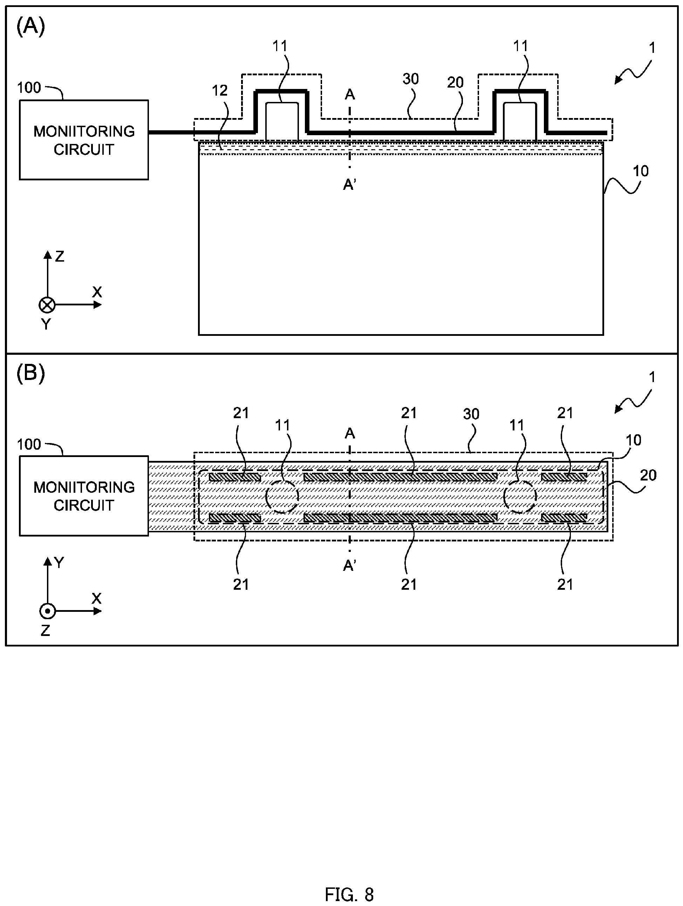

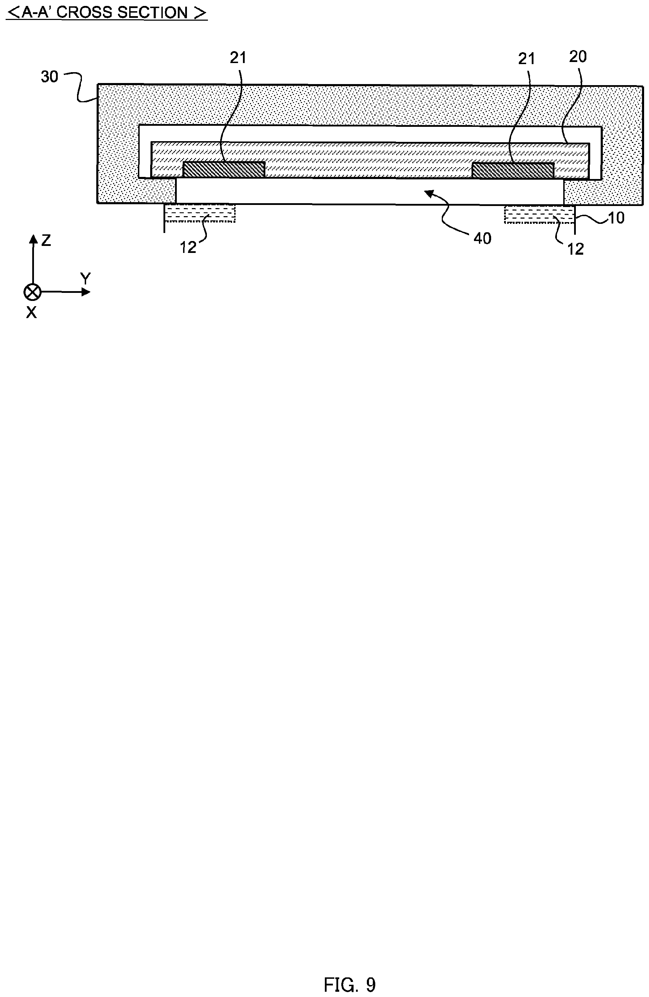

In the fourth modified example, the detection part 21 is provided so as to face a sealing part of the battery cell 10. FIG. 8 and 9 are schematic diagrams showing an example of the fourth modified example. FIG. 8 is a schematic diagram of the configuration of the battery device 1 similar to FIG.1. FIG. 9 shows a cross-sectional view taken along line A-A' in FIG. 8 as viewed from the X direction.

In Part A of FIG. 8, the sealing part 12 of the battery cell 10 is shown. The sealing part 12 seals the upper edge of the battery cell 10. In the example shown in Part B of FIG. 8, the detection part 21 is disposed on the edge of the battery cell 10. That is, as shown in FIG. 9, the detection part 21 is provided so as to face the sealing part 12 of the battery cell 10 .

The location in the battery cell 10 where hydrogen sulfide is generated is most likely to be the sealing part 12 of the battery cell 10. This is because the sealing part 12 tends to have lower durability against scratches than other parts. Therefore, according to the fourth modification, by providing the detection part 21 opposite the sealing part 12, the detection accuracy of the battery device 1 can be further improved.

### 1.4.5 Fifth Modification

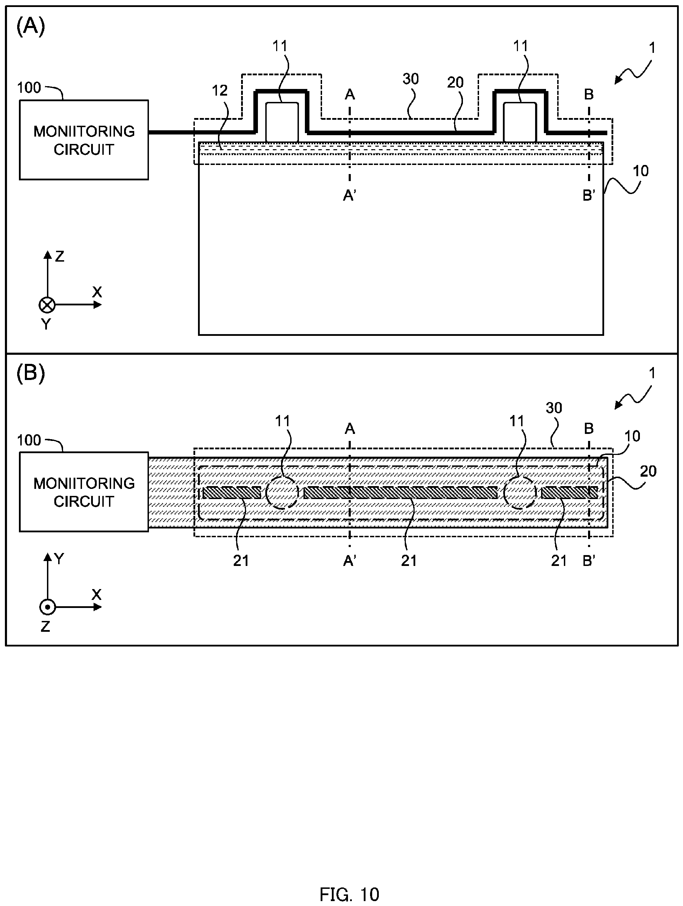

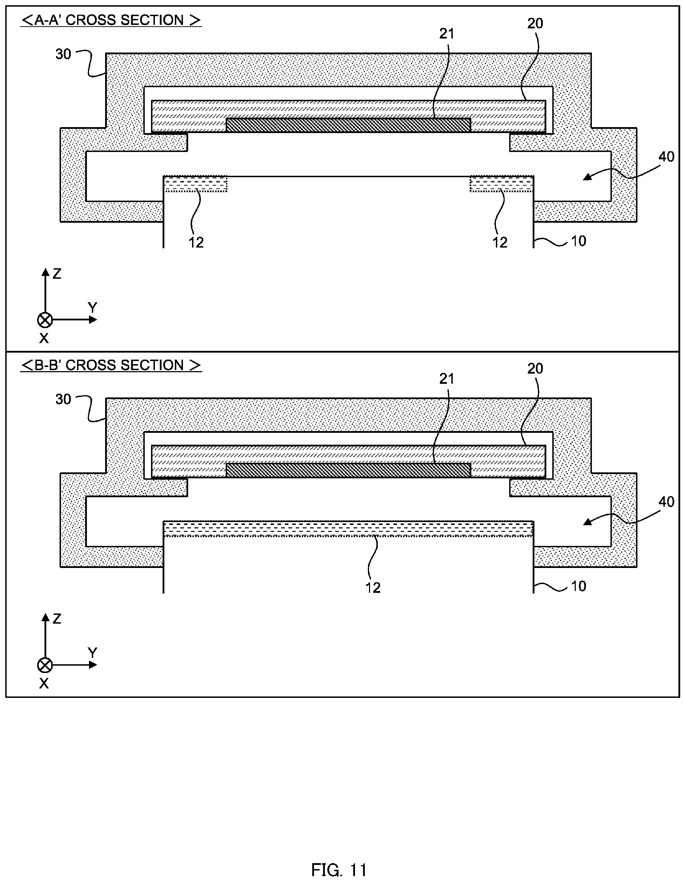

In the fifth modified example, the insulation member 30 is formed so as to surround the sealing part 12 of the battery cell 10. FIG. 10 and 11 are schematic diagrams showing an example of the fifth modified example. FIG. 10 is a schematic diagram of the configuration of the battery device 1 similar to FIG.1. FIG. 11 shows a cross-sectional view taken along line A-A' in FIG. 10, seen from the X direction, and a cross-sectional view taken along line B-B'.

In Part A of FIG. 10, the sealing part 12 of the battery cell 10 is shown. The sealing part 12 seals the upper edge of the battery cell 10. In the example shown in Part A of FIG. 10, the sealing part 12 is covered with the outer surface (indicated by the dashed line) of an insulation member 30. Pat B of FIG.10, the detection part 21 is disposed outside the electrode terminal 11 of the battery cell 10, in contrast to the example shown in Part B of FIG. 1. As shown in FIG. 11, the insulation member 30 is formed so as to surround the sealing part 12 .

As described above, the sealing part 12 of the battery cell 10 is highly likely to be a location in the battery cell 10 where hydrogen sulfide is generated. Therefore, according to the fifth modification, since the insulation member 30 is formed so as to surround the sealing part 12, the hydrogen sulfide gas generated from the battery cell 10 can be trapped inside the insulation member 30. As a result, hydrogen sulfide can be prevented from leaking from the battery device 1. In addition, since the generated hydrogen sulfide remain in the vicinity of the detection part 21, the detection accuracy of the battery device 1 can be further improved. In the fifth modified example, the shape of the insulation member 30 shown in FIG. 11 is merely one example. The insulation member 30 may have any suitable shape as long as it is formed to surround the sealing part 12.

### 1.4.6 Other

The above-described modifications may be combined as appropriate. For example, the third and fourth modifications may be combined. In this case, the detection part 21 is provided in the recess 23 of the circuit board 20 and is provided so as to face the sealing unit 12 of the battery cell 10.

### 2. SECOND EMBODIMENT

The second embodiment will be described below. The following description will focus on the differences from the first embodiment, and descriptions that overlap with the first embodiment will be omitted as appropriate.

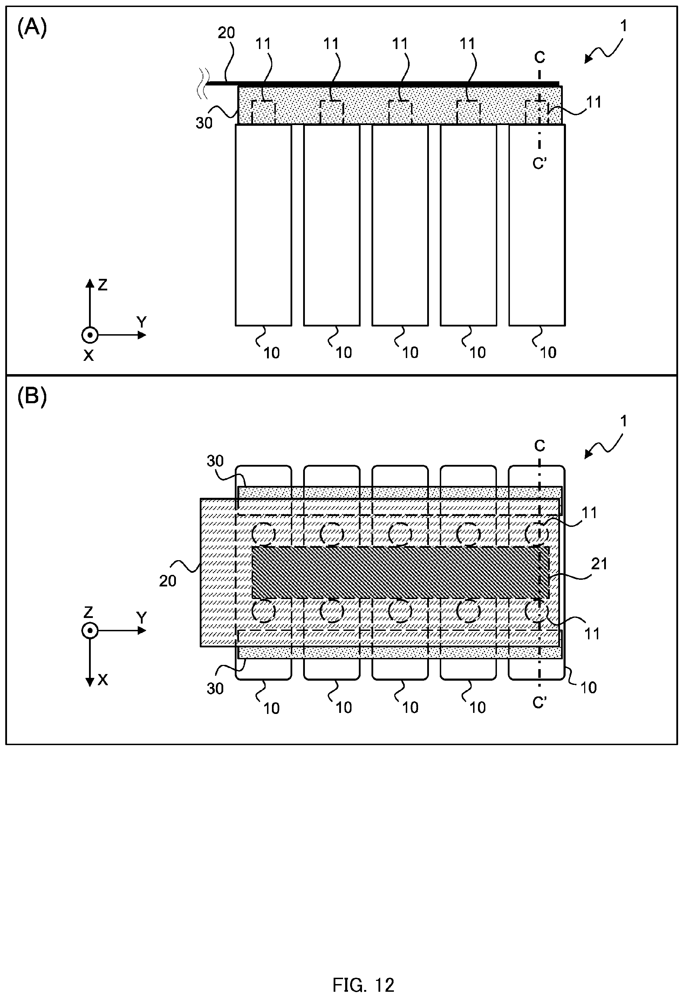

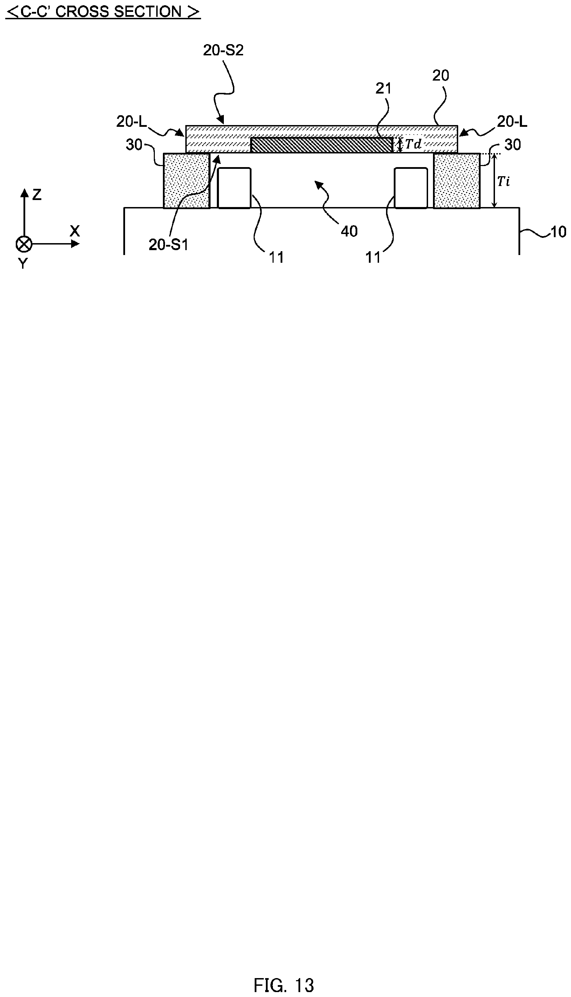

FIG. 12 and 13 are schematic diagrams showing the configuration of the battery device 1 according to the second embodiment. The battery device 1 includes a plurality of battery cells 10 that form a battery stack, the circuit board 20, and the insulation member 30. In Part A and B of FIG. 12 show the battery device 1 as viewed from different directions. In the second embodiment, the X direction is the width direction of the battery stack. The Y direction is the depth direction of the battery stack. The Z direction is the vertical direction. In Part A of FIG. 12, shows the battery device 1 as viewed from the X direction, and Part B shows the battery device 1 as viewed from the Z direction. Part B of FIG. 12 can also be equivalent to a top view of the battery device 1. FIG. 13 shows a cross-sectional view taken along line C-C' in FIG. 12 as viewed from the Y direction.

In the second embodiment, the circuit board 20 is disposed on the upper surfaces of the multiple battery cells 10 and extends in the Y direction. The insulation members 30 are present on both ends of the circuit board 20 and are interposed between a part of the circuit board 20 and the battery cell 10. The detection part 21 of the circuit board 20 is exposed to a space 40 surrounded by the battery cell 10, the circuit board 20, and the insulation member 30. That is, the detection part 21 is provided on the first surface 20-S1 of the circuit board 20, similarly to the first embodiment. In the example shown in Part B of FIG. 12, the detection part 21 is disposed so as to extend in the Y direction between the two electrode terminals 11 of each battery cell 10 . Furthermore, the battery device 1 may include the monitoring circuit 100 that is connected to the circuit board 20 and monitors the detection status of the detection part 21, similarly to the first embodiment.

Furthermore, in the second embodiment, as shown in FIG. 13, the electrode terminals 11 of the battery cells 10 are present within the spaces 40 and are not in contact with the circuit board 20. In other words, the thickness Ti of the insulation member 30 is larger than the length of the electrode terminal 11.

### 2.2 Effects

As in the first embodiment, the battery device 1 according to the second embodiment can detect the generation of hydrogen sulfide from the battery cells 10 by the detection part 21 that reacts to hydrogen sulfide. Furthermore, according to the second embodiment, similarly to the first embodiment, the insulation member 30 is interposed between the battery cell 10 and a part of the circuit board 20 having the detection part 21. The detection part 21 is exposed to the space 40 surrounded by the battery cell 10, the circuit board 20, and the insulation member 30. Therefore, according to the second embodiment, similarly to the first embodiment, it is possible to provide a battery device 1 with high accuracy in detecting hydrogen sulfide.

Furthermore, according to the second embodiment, the electrode terminals 11 of the battery cells 10 are present within the space 40 and are not in contact with the circuit board 20. Generally, in a battery cell 10, the joints of the electrode terminals 11 have weak sealing. Therefore, the vicinity of the electrode terminal 11 is highly likely to be a location where hydrogen sulfide is generated. Therefore, this configuration can prevent short circuits with the circuit board 20 while allowing hydrogen sulfide generated near the electrode terminal 11 to remain within the space 40. As a result, the detection accuracy of the battery device 1 can be improved.

### 2.3 Modifications

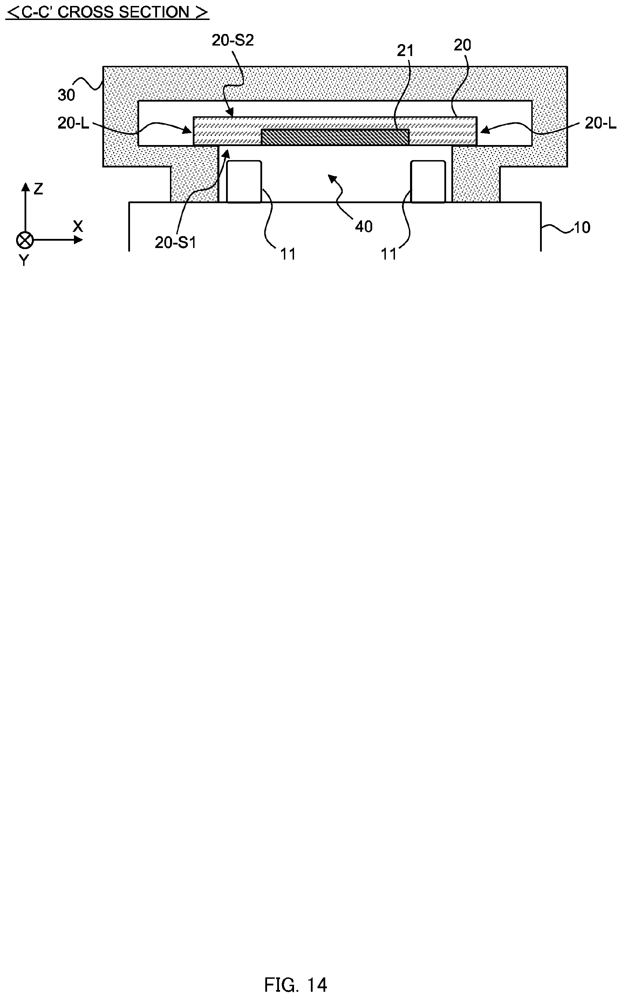

As a modification, the insulation member 30 may be integrally formed so as to cover a part of the first surface 20-S1, the side surface 20-L, and the second surface 20-S2 of the circuit board 20, similarly to the first embodiment. FIG. 14 is a schematic diagram showing a modified example. FIG. 14 shows a cross-sectional view similar to FIG. 13. In the example shown in FIG. 14, the insulation member 30 is integrally formed so as to cover a part of the first surface 20-S1, the side surface 20-L, and the second surface 20-S2 of the circuit board 20. In other words, the insulation member 30 is integrally formed so as to surround the circuit board 20. In particular, the space 40 serves as an opening part in the insulation member 30. According to this modification, the detection accuracy of the battery device 1 can be improved. In addition, the protection performance of the circuit board 20 can be improved.

As other modifications, the first to fifth modifications described in the first embodiment can also be applied to the second embodiment as appropriate.

### 3. THIRD EMBODIMENT

The third embodiment will now be described. The following description will focus on the differences from the first and second embodiments, and descriptions that overlap with the first and second embodiments will be omitted as appropriate.

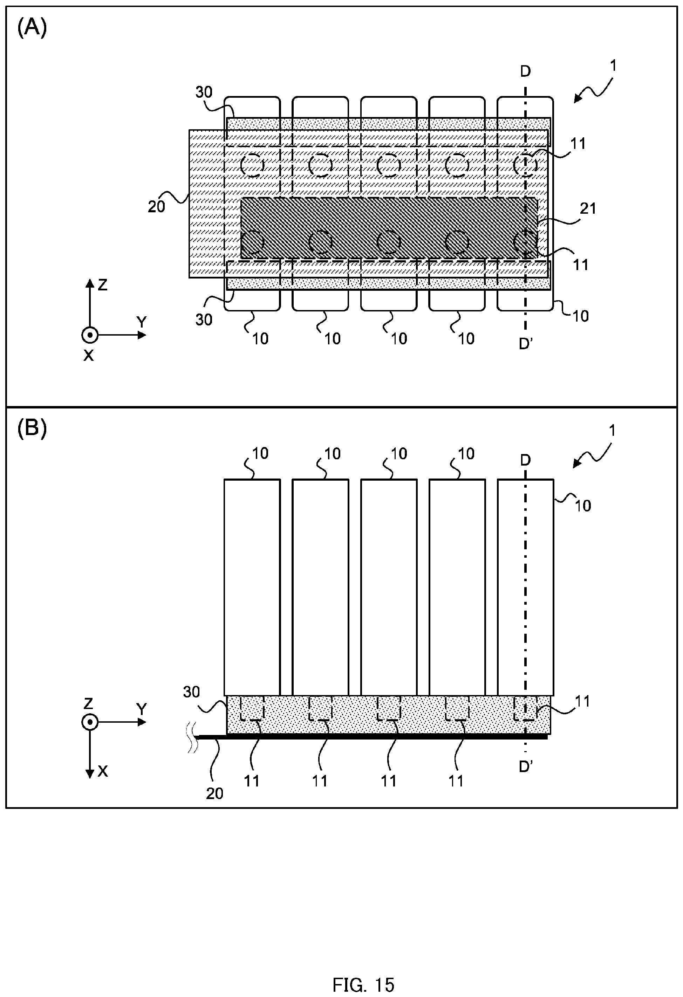

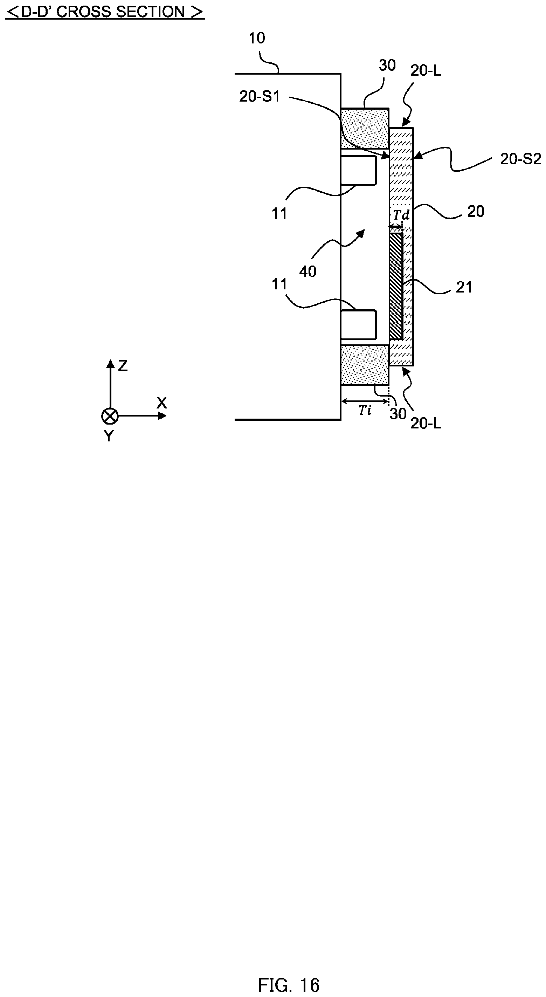

FIG. 15 and 16 are schematic diagrams showing a configuration of the battery device 1 according to the third embodiment. The battery device 1 includes a plurality of battery cells 10 that form a battery stack, the circuit board 20, and the insulation member 30. In Part A and B of FIG. 15 show the battery device 1 as viewed from different directions. In the third embodiment, the X direction is the width direction of the battery stack. The Y direction is the depth direction of the battery stack. The Z direction is the vertical direction. In Part A of FIG. 15 shows the battery device 1 as viewed from the X direction, and Part B shows the battery device 1 as viewed from the Z direction. Part B of FIG. 15 can also be considered as a top view of the battery device 1. FIG. 16 shows a cross-sectional view taken along line D-D' shown in FIG. 15 as viewed from the Y direction.

In the third embodiment, the electrode terminal 11 of each battery cell 10 is a horizontal terminal. The circuit board 20 is disposed on the surface of the multiple battery cells 10 on the electrode terminal 11 side, and extends in the Y direction. The insulation members 30 are present on both ends of the circuit board 20 and are interposed between a part of the circuit board 20 and the battery cell 10. The detection part 21 of the circuit board 20 is exposed to the space 40 surrounded by the battery cell 10, the circuit board 20, and the insulation member 30. That is, the detection part 21 is provided on the first surface 20-S1 of the circuit board 20, similarly to the first embodiment. In the example shown in Part A of FIG. 15, the detection part 21 is disposed so as to extend in the Y direction closer to the lower one of the two electrode terminals 11. Furthermore, the battery device 1 may include the monitoring circuit 100 that is connected to the circuit board 20 and monitors the detection status of the detection part 21, similarly to the first embodiment.

As shown in FIG. 16, in the third embodiment, similarly to the second embodiment, the electrode terminals 11 of the battery cells 10 are present within the space 40 and are not in contact with the circuit board 20. In other words, the thickness Ti of the insulation member 30 is greater than the length of the electrode terminal 11. Furthermore, in the third embodiment, the detection part 21 is located closer to the lower one of the two electrode terminals 11.

### 3.2 Effects

As in the first embodiment, the battery device 1 according to the third embodiment can detect the generation of hydrogen sulfide from the battery cells 10 by the detection part 21 that reacts to hydrogen sulfide. Furthermore, according to the third embodiment, similarly to the first embodiment, the insulation member 30 is interposed between the battery cell 10 and a part of the circuit board 20 having the detection part 21. The detection part 21 is exposed to the space 40 surrounded by the battery cell 10, the circuit board 20, and the insulation member 30. Therefore, according to the third embodiment, like the first embodiment, it is possible to provide a battery device 1 that can detect hydrogen sulfide with high accuracy.

Furthermore, according to the third embodiment, similarly to the second embodiment, the electrode terminals 11 of the battery cells 10 are present within the space 40 and are not in contact with the circuit board 20. This makes it possible to prevent short circuits with the circuit board 20 while allowing hydrogen sulfide generated near the electrode terminal 11 to remain within the space 40. As a result, the detection accuracy of the battery device 1 can be improved.

Furthermore, according to the third embodiment, the detection part 21 is located closer to the lower one of the two electrode terminals 11. In the third embodiment, the electrode terminals 11 of the battery cells 10 are horizontal terminals. For this reason, hydrogen sulfide generated near the electrode terminal 11 tends to spread downwards. This configuration can make it easier for the detection part 21 to react with hydrogen sulfide. As a result, the detection accuracy of the battery device 1 can be improved.

### 3.3 Modifications

As a modification, the insulation member 30 may be integrally formed so as to cover a part of the first surface 20-S1, the side surface 20-L, and the second surface 20-S2 of the circuit board 20, similarly to the first embodiment. In other words, the insulation member 30 may be integrally formed so as to surround the circuit board 20. According to this modification, the detection accuracy of the battery device 1 can be improved. In addition, the protection performance of the circuit board 20 can be improved.

As other modifications, the first to fifth modifications described in the first embodiment can also be applied to the third embodiment as appropriate.

### 4. FOURTH EMBODIMENT

The fourth embodiment will now be described. However, the following description will focus on the differences from the first and second embodiments, and descriptions that overlap with the first and second embodiments will be omitted as appropriate.

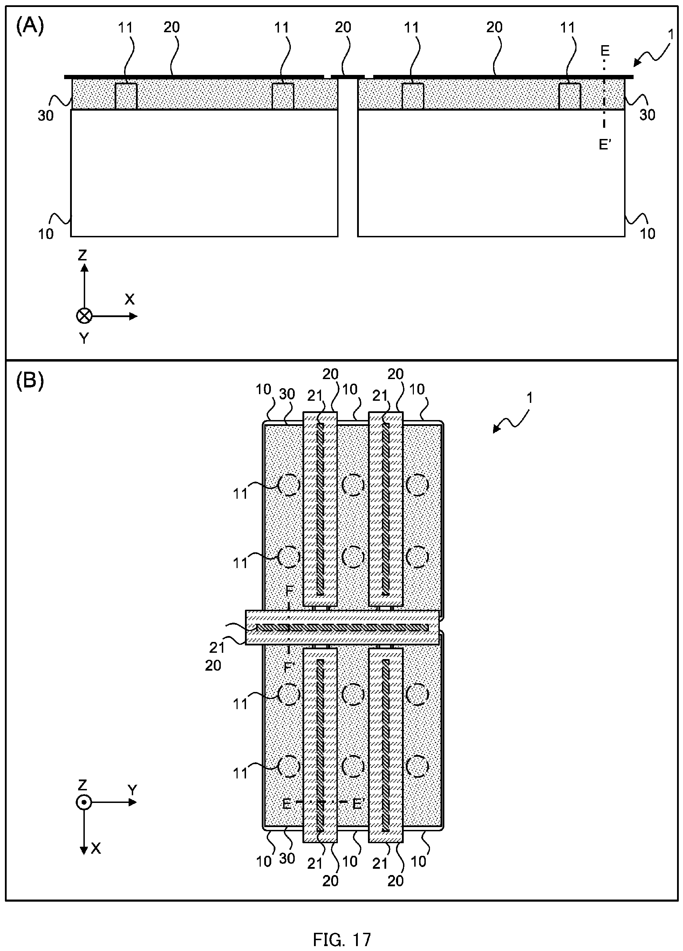

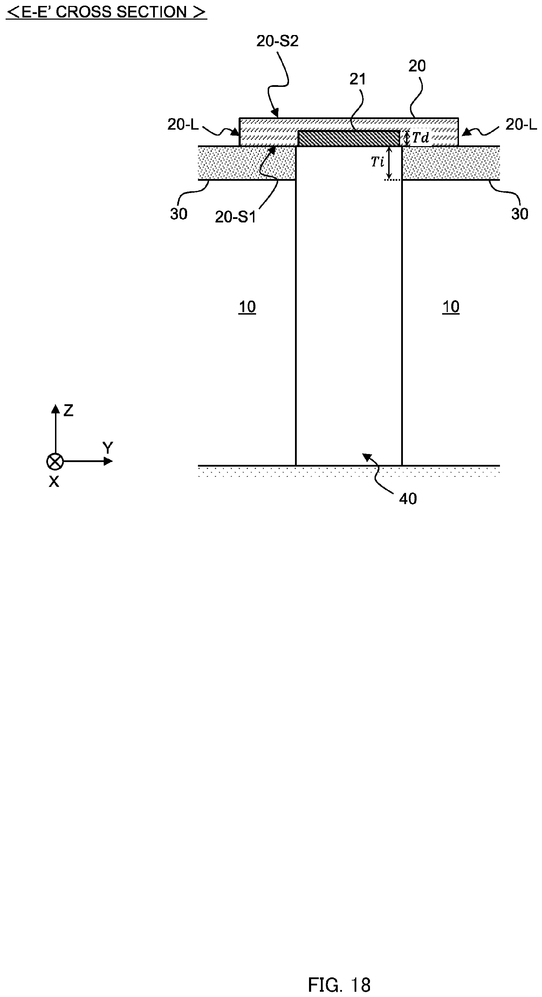

FIGs. 17 and 18 are schematic diagrams showing the configuration of a battery device 1 according to the fourth embodiment. The battery device 1 includes a plurality of battery cells 10 that form a battery stack, a plurality of circuit boards 20, and a plurality of insulation members 30. The plurality of battery cells 10 are arranged in two rows of three cells each to form the battery stack. In Part A and B of FIG. 17 show the battery device 1 as viewed from different directions. In the fourth embodiment, the X direction is the direction in which the rows of battery cells 10 are arranged. The Y direction is the direction in which the battery cells 10 are arranged in a row. The Z direction is the vertical direction. In Part A of FIG. 17 shows the battery device 1 as viewed from the Y direction, and Part B shows the battery device 1 as viewed from the Z direction. Part B of FIG. 17 can also be considered as a top view of the battery device 1. FIG. 18 shows a cross-sectional view taken along line E-E' in FIG. 17 as viewed from the X direction. A cross-sectional view taken along line F-F' in FIG. 17 from the Y direction is similar to the cross-sectional view shown in FIG. 18.

In the fourth embodiment, the multiple insulation members 30 are arranged so as to cover the upper surface of each battery cell 10. Each of the multiple circuit boards 20 is arranged so as to bridge adjacent battery cells 10. Therefore, each insulation member 30 is interposed between a part of each circuit board 20 and the battery cell 10.

The detection part 21 of the circuit board 20 is provided on the first surface 20-S1 of the circuit board 20 and extends in the longitudinal direction of the circuit board 20. As shown in particular in FIGs. 17 and 18, in the fourth embodiment, the circuit board 20 is disposed so that the detection part 21 is located between adjacent battery cells 10. Therefore, the detection part 21 is exposed to the space 40 surrounded by the battery cell 10, the circuit board 20, and the insulation member 30. Furthermore, the battery device 1 may include a monitoring circuit 100 that is connected to each circuit board 20 and monitors the detection status of the detection part 21 of each circuit board 20.

### 4.2 Effects

As in the first embodiment, the battery device 1 according to the fourth embodiment can detect the generation of hydrogen sulfide from the battery cells 10 by the detection part 21 that reacts to hydrogen sulfide. Furthermore, according to the fourth embodiment, similarly to the first embodiment, the insulation member 30 is interposed between the battery cell 10 and a part of the circuit board 20 having the detection part 21. The detection part 21 is exposed to the space 40 surrounded by the battery cell 10, the circuit board 20, and the insulation member 30. Therefore, according to the fourth embodiment, like the first embodiment, it is possible to provide a battery device 1 that has high accuracy in detecting hydrogen sulfide.

Furthermore, according to the fourth embodiment, the circuit board 20 is disposed so that the detection part 21 is located between adjacent battery cells 10. **In** the battery device 1 according to the fourth embodiment, it is considered that hydrogen sulfide generated from the battery cells 10 tends to remain between adjacent battery cells 10 . Therefore, this configuration can make the detection part 21 more likely to react with hydrogen sulfide. As a result, the detection accuracy of the battery device 1 can be improved. **In** addition, the detection part 21 is prevented from coming into contact with the battery cell 10, thereby preventing a short circuit. As a result, the insulation properties of the battery device 1 can be improved.

In the fourth embodiment, adjacent battery cells 10 may be bonded together with an adhesive, etc. If there is a gap between adjacent battery cells 10, it is possible to configure the battery device 1 described above by providing the detection part 21 in accordance with the gap. As modified examples, the first to fifth modified examples described in the first embodiment can also be applied to the fourth embodiment as appropriate.

## Claims

1. A battery device (1) comprising:
a battery cell (10) having a sulfide-based electrolyte;
a circuit board (20) having a detection part (21) configured to react to hydrogen sulfide; and
an insulation member (30) interposed between a part of the circuit board (20) and the battery cell (10), wherein
a part or all of the detection part (21) is exposed to a space (40) surrounded by the battery cell (10), the circuit board (20), and the insulation member (30).

2. A battery device (1) according to claim 1, wherein
a pattern (22) of the circuit board (20) is formed of a metal that corrodes upon reaction with hydrogen sulfide, and
the detection part (21) is formed by a part of the pattern (22) exposed on a surface of the circuit board (20).

3. A battery device (1) according to claim 2, further comprising a monitoring circuit (100), wherein
the pattern (22) is electrically connected between a first node (401) and a second node (402), and
the monitoring circuit (100) is configured to determine whether hydrogen sulfide is generated from the battery cell (10) based on a voltage change between the first node (401) and the second node (402).

4. A battery device (1) according to claim 1, wherein
the detection part (21) comprises a first detection part (21-1) exposed to the space (40) and a second detection part (21-2) other than the first detection part (21-1), and
the insulation member (30) is interposed between the second detection part (21-2) and the battery cell (10).

5. A battery device (1) according to claim 1, wherein
a first surface (20-S1) of the circuit board (20) faces the space (40), and
the insulation member (30) is interposed at least between a part of the first surface (20-S1) and the battery cell (10), wherein the part of the first surface (20-S1) is other than the detection part (21).

6. A battery device (1) according to claim 1, wherein
the circuit board (20) has a first surface (20-S1) facing the space (40), a second surface (20-S2) opposite to the first surface (20-S1), and a side surface (20-L) between the first surface (20-S1) and the second surface (20-S2), and
the insulation member (30) is integrally formed so as to cover the side surface (20-L), the second surface (20-S2), and a part of the first surface (20-S1) of the circuit board (20).

7. The battery device (1) according to claim 1, wherein
the insulation member (30) has an opening part, and
the space (40) is the opening part of the insulation member (30).

8. The battery device (1) according to claim 1, wherein
the circuit board (20) is bonded to the insulation member (30) at a boundary of the space (40).

9. A battery device (1) according to claim 1, wherein
the circuit board (20) has a recess (23) on a first surface (20-S1) facing the space (40), and
the detection part (21) is provided in the recess (23).

10. The battery device (1) according to claim 1, wherein
a thickness (Td) of the detection part (21) is thinner than a thickness (Ti) of a part of the insulation member (30) surrounding the space (40).

11. The battery device (1) according to claim 1, wherein
an electrode terminal (11) of the battery cell (10) is present within the space (40) and is not in contact with the circuit board (20).

12. The battery device (1) according to claim 1, wherein
the insulation member (30) is formed to surround a sealing part (12) of the battery cell (10).

13. The battery device (1) according to any one of claims 1 to 12, wherein
the detection part (21) is provided to face a sealing part (12) of the battery cell (10).

14. The battery device (1) according to any one of claims 1 to 10, wherein
the circuit board (20) is provided such that the detection part (21) is located between adjacent battery cells (10).
